# EUROPEAN PATENT SPECIFICATION

(11) **EP 2 205 018 B1**
(45) Date of publication and mention of the grant of the patent: **01.04.2015**
(21) Application number: 08853346.8
(22) Date of filing: 10.11.2008
(51) Int. Cl.: H04W 72/04, H04W 80/00

(54) **METHOD, DEVICE, AND SYSTEM FOR CONTROLLING OPERATION MODE OF HIGH SPEED DOWNLINK PACKET ACCESS SYSTEM**
VERFAHREN, VORRICHTUNG UND SYSTEM ZUR ÜBERWACHUNG DES BETRIEBSMODUS VON EINEM HOCHGESCHWINDIGKEITS-DOWNLINK-PAKETZUGRIFFSSYSTEM
PROCÉDÉ, DISPOSITIF, ET SYSTÈME PERMETTANT LA COMMANDE DE MODE DE FONCTIONNEMENT DE SYSTÈME D'ACCÈS PAR PAQUETS EN LIAISON DESCENDANTE HAUT DÉBIT

(30) Priority: 09.11.2007 CN 200710188203
(43) Date of publication of application: 07.07.2010
(73) Proprietor: Huawei Technologies Co., Ltd., Longgang District Shenzhen, Guangdong 518129 (CN)
(72) Inventor: DAI, Dingzhang Huawei Technologies Co., Ltd., Shenzhen, 518129 (CN)
(74) Representative: Kreuz, Georg Maria
(86) International application number: PCT/CN2008/072993
(87) International publication number: WO 2009/067910

(56) References cited:
- CN-A- 1 457 557
- CN-A- 1 926 789
- CN-A- 101 060 380
- "3rd Generation Partnership Project; Technical Specification Group Radio Access Network; Radio Resource Control (RRC); Protocol Specification (Release 8)" 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 September 2007 (2007-09-01), pages 1-1404, XP050368019
- SIEMENS: "Way forward on Continuous Connectivity for Packet Data Users" 3GPP DRAFT; R1-062242_WAY_FORWARD_CPC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Tallinn; 20060823, 23 August 2006 (2006-08-23), XP050102772 [retrieved on 2006-08-23]
- "3rd Generation Partnership Project; Technical Specification Group Radio Access Network; Multiplexing and channel coding (FDD) (Release 7)" 3GPP STANDARD; 3GPP TS 25.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.6.0, 1 September 2007 (2007-09-01), pages 1-98, XP050366768
- ERICSSON: "HS-SCCH orders for HS-SCCH-less operation" 3GPP DRAFT; R1-080904, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20080205, 5 February 2008 (2008-02-05), XP050109378 [retrieved on 2008-02-05]

## Description

### FIELD OF THE INVENTION

The present invention relates to a high speed downlink packet access (HSDPA) technique, and more particularly to a method, an apparatus, and a system for controlling a working mode of an HSDPA system.

### BACKGROUND

An HSDPA technique is a downlink high speed data solution in a wideband code division multiple access (WCDMA) system. A high speed shared control channel (HS-SCCH) is introduced into the HSDPA technique, in which HS-SCCH is a downlink control channel and is configured to bear control information and orders, etc. When a base station (NodeB) transmits downlink data, in order to reduce signaling overhead on the HS-SCCH, an HS-SCCH less operation mode is proposed in the industry, but when the NodeB does not transmit the downlink data, the system needs not to work under the HS-SCCH less operation mode.

In order to switch a working mode of the HSDPA system, a method for controlling the working mode of the HSDPA system by adopting a high-level signaling configuration manner exists in the prior art. Through the method, the NodeB and a user equipment (UE) may enter the HS-SCCH less operation mode or exit the HS-SCCH less operation mode. The high-level signaling refers to a Layer 3 signaling in the WCDMA system. In the method for controlling the working mode of the HSDPA system by adopting the high-level signaling configuration manner, particularly, a radio network controller (RNC) respectively initiates a configuration signaling to the NodeB and the UE, so as to configure the NodeB and the UE to enter the HS-SCCH less operation mode or a common mode. After the NodeB and the UE are synchronized, the configuration becomes effective.

The inventor(s) of the application finds through the research that in the solution, a signaling interaction process of the RNC and the NodeB, a signaling interaction process of the RNC and of the uplink and the downlink need to consume a certain period of time, and the total consumed time is measured in seconds, and this reveals that a configuration speed of this manner is much slower. Before the configuration becomes effective, the UE still needs to execute the complex determining and receiving processes, the processing on the UE side is complex, and the processing resource overhead is large. In addition, during the signaling interaction process of the technical solution, air interface resource overhead is generated.

3GPP TS 25.331 V8.0.0 relates to HS_SCCH_LESS_STATUS variable. If the UE receives RRC CONNECTION SETUP, ACTIVE SET UPDATE, CELL UPDATE CONFIRM, or any reconfiguration message, the UE shall determine the value for the HS_SCCH_LESS_STATUS variable. The variable HS_SCCH_LESS_STATUS shall be set to TRUE only when all the following conditions are met: the UE is in CELL_DCH state; the variable HS_DSCH_RECEPTION is set to TRUE; no DCH transport channel is configured; the UE is not configured in MIMO mode; the variable HS_SCCH_LESS_PARAMS is set; and the UE has received IE "HS-SCCH less information". If any of the above conditions is not met and the variable HS_SCCH_LESS_STATUS is set to TRUE and the value of IE "HS-SCCH less information" included in this message is not "Continue HS-SCCH less operation", the UE shall: set the variable HS_SCCH_LESS_STATUS to FALSE; clear the variable HS_SCCH_LESS_PARAMS; and stop all HS-SCCH less related activities. Whenever the variable HS_SCCH_LESS_STATUS is set to TRUE, the UE shall: configure the physical and MAC layers to operate according to the HS_SCCH_LESS_PARAMS; and configure the physical layer to use a virtual IR buffer size of at least 4536 bits for HS-SCCH less HS-DSCH transmissions.

SIEMENS: "Way forward on Continuous Connectivity for Packet Data Users" (3GPP contribution RI 062242) mentions that the UE is once allowed by L1 signalling to use T1 and T2 parameters, the UE will autonomously apply DTX until further L1 signalling moves it from CPC mode to active, so no change of the DTX concept.

3GPP TS 25.212 V7.6.0 relates to orders for activation and deactivation of DTX and DRX.

### SUMMARY OF THE INVENTION

The present invention provides a method for controlling a working mode of an HSDPA system so that fast control of the working mode of the HSDPA system may be implemented and therefore system resources may be saved.

The present invention provides also a base station for controlling a working mode of an HSDPA system so that fast control of the working mode of the HSDPA system may be implemented and therefore system resources may be saved.

The present invention provides further a UE for controlling a working mode of an HSDPA system so that fast control of the working mode of the HSDPA system may be implemented and therefore system resources may be saved.

The present invention provides still further an HSDPA system for controlling a working mode of an HSDPA system so that fast control of the working mode of the HSDPA system may be implemented and therefore system resources may be saved.

According to the first aspect of the invention the method for controlling a working mode of an HSDPA system includes:
It is determined whether an activation state of an HS-SCCH less operation mode of the HSDPA system needs to be changed.

If the activation state of the HS-SCCH less operation mode needs to be changed, a physical layer signaling is transmitted to a UE, so as to instruct the UE to activate or deactivate the HS-SCCH less operation mode. The physical layer signaling is preset, or the physical layer signaling is generated after it is determined that the activation state of the HS-SCCH less operation mode of the HSDPA system needs to be changed, wherein the physical layer signaling is an HS-SCCH order for activating or deactivating the HS-SCCH less operation mode in HS-SCCH order, wherein the HS-SCCH order having order type of 000 and having a bit of activating or deactivating the HS-SCCH less operation mode set to a value indicating performing activation is served as an order of activating the HS-SCCH less operation mode; and the HS-SCCH order having order type of 000 and having the bit of activating or deactivating the HS-SCCH less operation mode set to a value different from the value indicating performing activation is served as an order of deactivating the HS-SCCH less operation mode.

Network side equipment includes a determining unit, a signaling generating unit, and a first communication unit.

The determining unit is configured to determine whether an activation state of an HS-SCCH less operation mode of an HSDPA system needs to be changed.

The signaling generating unit is configured to generate a physical layer signaling or invoke a preset physical layer signaling for activating or deactivating the HS-SCCH less operation mode, when the activation state of the HS-SCCH less operation mode needs to be changed.

The first communication unit is configured to transmit the physical layer signaling for activating or deactivating the HS-SCCH less operation mode to a UE, so as to instruct the UE to activate or deactivate the HS-SCCH less operation mode, wherein the physical layer signaling is an HS-SCCH order for activating or deactivating the HS-SCCH less operation mode in HS-SCCH order, wherein the HS-SCCH order having order type of 000 and having a bit of activating or deactivating the HS-SCCH less operation mode set to a value indicating performing activation is served as an order of activating the HS-SCCH less operation mode; and the HS-SCCH order having order type of 000 and having the bit of activating or deactivating the HS-SCCH less operation mode set to a value different from the value indicating performing activation is served as an order of deactivating the HS-SCCH less operation mode.

The method for controlling a working mode of an HSDPA system includes:
A physical layer signaling, from a network side, for activating or deactivating an HS-SCCH less operation mode is received.

The HS-SCCH less operation mode is activated or deactivated according to the physical layer signaling for activating or deactivating the HS-SCCH less operation mode, wherein the physical layer signaling is an HS-SCCH order for activating or deactivating the HS-SCCH less operation mode in HS-SCCH order, wherein the HS-SCCH order having order type of 000 and having a bit of activating or deactivating the HS-SCCH less operation mode set to a value indicating performing activation is served as an order of activating the HS-SCCH less operation mode; and the HS-SCCH order having order type of 000 and having the bit of activating or deactivating the HS-SCCH less operation mode set to a value different from the value indicating performing activation is served as an order of deactivating the HS-SCCH less operation mode.

According to another aspect of the invention the UE includes: a second communication unit and an activation state executing unit.

The second communication unit is configured to receive a physical layer signaling, from a network side, for activating or deactivating an HS-SCCH less operation mode.

The activation state executing unit is configured to activate or deactivate the HS-SCCH less operation mode, according to the physical layer signaling for activating or deactivating the HS-SCCH less operation mode, wherein the physical layer signaling is an HS-SCCH order for activating or deactivating the HS-SCCH less operation mode in HS-SCCH order, wherein the HS-SCCH order having order type of 000 and having a bit of activating or deactivating the HS-SCCH less operation mode set to a value indicating performing activation is served as an order of activating the HS-SCCH less operation mode; and the HS-SCCH order having order type of 000 and having the bit of activating or deactivating the HS-SCCH less operation mode set to a value different from the value indicating performing activation is served as an order of deactivating the HS-SCCH less operation mode.

According to still another aspect of the invention the HSDPA system includes the network side equipment according to the embodiments of the present invention and the UE according to the embodiments of the present invention.

It may be known from the technical solution that in the technical solution that the working mode of the HSDPA system is controlled through the physical layer signaling according to the embodiments of the present invention, when the activation state of the HS-SCCH less operation mode needs to be changed, the physical layer signaling for activating or deactivating the HS-SCCH less operation mode is transmitted to the UE, and the UE activates or deactivates the HS-SCCH less operation mode of the UE side, according to the physical layer signaling for activating or deactivating the HS-SCCH less operation mode. As compared with the solution in the prior art that the HSDPA system is made to enter or exit the HS-SCCH less operation mode by adopting the high-level signaling, the solution of the present invention that the HS-SCCH less mode needs to be changed, the physical layer signaling for activating or deactivating the HS-SCCH less operation mode is transmitted to the UE, and the UE activates or deactivates the HS-SCCH less operation mode of the UE side, according to the physical layer signaling for activating or deactivating the HS-SCCH less operation mode. As compared with the solution in the prior art that the HSDPA system is made to enter or exit the HS-SCCH less operation mode by adopting the high-level signaling, the solution of the present invention that the HS-SCCH less operation mode is activated or deactivated by adopting the physical layer signaling has a higher speed, so as to quickly control the working mode of the HSDPA system, so that when the NodeB determines to deactivate the HS-SCCH less operation mode, the UE may quickly know the activation state of the HS-SCCH less operation mode of the NodeB side, thereby preventing the meaningless complex determination, and saving processing resources of the UE. Furthermore, air interface resources are further saved in the configuration adopting the physical layer signaling as compared with the configuration adopting the high-level signaling interaction.

### BRIEF DESCRIPTION OF THE DRAWINGS

FIG. 1 is a schematic flow chart of a method for controlling a working mode of an HSDPA system according to an embodiment of the present invention;
FIG. 2 is a schematic structural view of a network side equipment for controlling the working mode of the HSDPA system according to an embodiment of the present invention; and
FIG. 3 is a schematic structural view of a UE for controlling the working mode of the HSDPA system according to an embodiment of the present invention.

### DETAILED DESCRIPTION OF THE EMBODIMENTS

An HSDPA technique is a downlink high speed data solution in a WCDMA system. Three channels, including an HS-SCCH, a high speed physical downlink shared channel (HS-PDSCH), and a high speed dedicated physical control channel (HS-DPCCH), are introduced in the HSDPA technique. The HS-SCCH is a downlink control channel and is configured to bear control information and orders, etc., in which the control information is used for demodulating data on an associated traffic channel. The HS-PDSCH is a downlink traffic channel and is configured to bear the data, in which the data may be demodulated according to the control information on the associated control channel. The HS-DPCCH is an uplink dedicated physical channel and is configured to bear three physical layer signals including an acknowledgement message (ACK), a non-acknowledgement message (NACK), and a channel quality indicator (CQI). The HS-SCCH, the HS-PDSCH, and the HS-DPCCH adopt a transmission time interval of 2 ms.

A technical solution of controlling a working mode of an HSDPA system through a physical layer signaling is provided in an embodiment of the present invention. In this solution, when an activation state of an HS-SCCH less operation mode needs to be changed, for example, when it is not necessary to transmit the data in the HS-SCCH less operation mode, the physical layer signaling for deactivating the HS-SCCH less operation mode is transmitted to the UE, and then the UE deactivates the HS-SCCH less operation mode of the UE side according to the physical layer signaling for deactivating the HS-SCCH less operation mode. When it is necessary to transmit the data in the HS-SCCH less operation mode, the physical layer signaling for activating the HS-SCCH less operation mode is transmitted to the UE, so as to instruct the UE to activate the HS-SCCH less operation mode in time. The physical layer signaling for activating or deactivating the HS-SCCH less operation mode may be preset, or may also be generated after it is determined that the activation state of the HS-SCCH less operation mode needs to be changed. If the physical layer signaling is preset, in the operation of setting the physical layer signaling, the physical layer signaling may be set and stored when establishing the link of the UE or during the reconfiguration. Subsequently, when it is necessary to use the physical layer signaling, the physical layer signaling may be directly invoked.

As compared with the conventional solution that the HSDPA system is made to enter or exit the HS-SCCH less operation mode by adopting the high-level signaling, the solution of the embodiments of the present invention that the HS-SCCH less operation mode is activated or deactivated by adopting the physical layer signaling has a higher speed, so as to quickly control the working mode of the HSDPA system, so that the UE may quickly know the activation state of the HS-SCCH less operation mode of the NodeB side, thereby preventing the meaningless complex determination, and saving processing resources of the UE. On the other hand, air interface resources are further saved in the configuration adopting the physical layer signaling as compared with the configuration adopting the high-level signaling interaction.

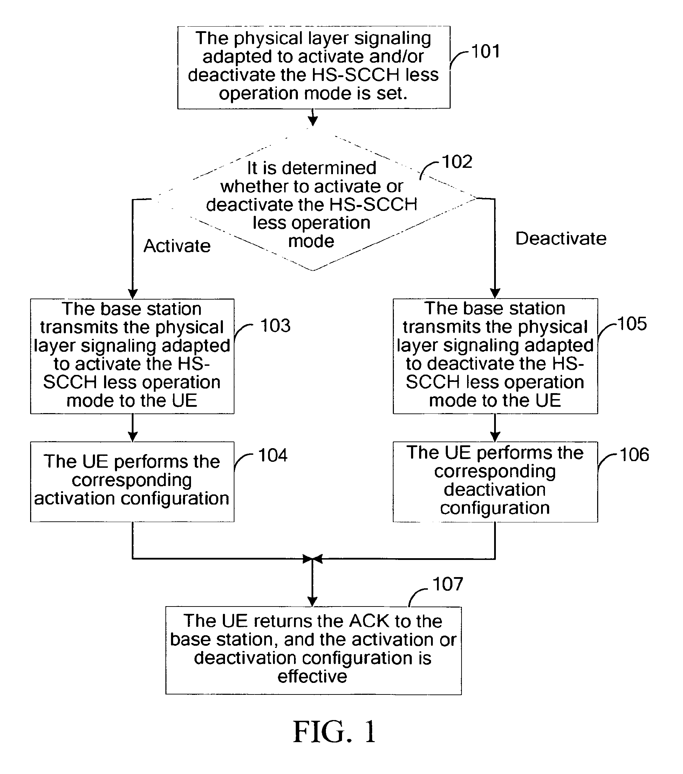

Referring to FIG. 1, the particular implementation manner of the method for controlling the working mode of the HS-SCCH according to an embodiment of the present invention is described as follows.

In step 101, the physical layer signaling for activating and/or deactivating the HS-SCCH less operation mode is preset.

The physical layer signaling may be set by a plurality of manners, for example, expanding the existing physical layer signaling or increasing a new physical layer signaling. One implementation manner is performing expansion on the basis of the existing HS-SCCH order. In order to facilitate the description of the manners of setting the physical layer signaling for activating and/or deactivating the HS-SCCH less operation mode, it is necessary to describe the HS-SCCH control information.

When the HSDPA system works under the HS-SCCH less operation mode, the NodeB transmits the data in two manners including a cyclic redundancy check code (CRC) attachment method 1 and a CRC attachment method 2 of the HS-PDSCH. Correspondingly, the NodeB transmits two types of control information including HS-SCCH type 1 control information and HS-SCCH type 2 control information. In addition to the type 1 control information and the type 2 control information, the control information borne on the HS-SCCH further includes type M control information. The difference among the three types of HS-SCCH control information is that information bits mapped to the HS-SCCH are different.

For the HS-SCCH type 1 control information, after the control information is mapped to the HS-SCCH, the HS-SCCH includes the information bits as follows:
1) Channelization-code-set information, 7 bit, respectively being represented as Xccs,1, Xccs,2, ..., Xccs,7;
2) Modulation scheme information, 1 bit, being represented as Xms,1;
3) Transport-block size information, 6 bit, being represented as Xtbs,1, X tbs,2, ..., X tbs,6;
4) Hybrid-ARQ process information, 3 bit, being represented as Xhap,1, Xhap,2, Xhap,3;
5) Redundancy and constellation version, 3 bit, being represented as Xrv,1 Xrv,2, Xrv,3;
6) New data indicator, 1 bit, being represented as Xnd,1;
7) UE identify, 16 bit, being represented as Xue,1, Xue,2, ..., Xue,16.

When the information bits are respectively set according to the values as follows, it represents that the corresponding order is currently transported on the HS-SCCH:
1) Xccs,1, Xccs,2, ..., Xccs,7and Xms,1 are set to "11100000";
2) Xtbs,1, X tbs,2, ..., and X tbs,6 are set to "111101";
3) Xhap,1, Xhap,2, Xhap,3, Xrv,1 Xrv,2, Xrv,3 are set to Xodt,1, Xodt,2, Xodt,3, Xord,1, Xord,2, Xord,3.

The three bits including Xodt,1, Xodt,2, Xodt,3 represent an order type, and when the Xodt,1, Xodt,2, and Xodt,3 are of different values, different order types are represented.

Xord,1, Xord,2, and Xord,3 represents different orders under a certain order type.

Currently, there is an already defined order type 000, that is, Xodt,1, Xodt,2, and Xodt,3 are set to "000", and under this order type, the mapping situations of the order are as follows.

Xord,1 is a discontinuous reception (DRX) order activation bit.

Xord,2 is a discontinuous transmission (DTX) order activation bit.

Xodt,3 is a reservation bit.

In the step, on the basis of the order, the physical layer signaling for activating the HS-SCCH less operation mode and/or the physical layer signaling for deactivating the HS-SCCH less operation mode are expanded. In this embodiment, the introduction is given by setting the two manners as follows as an example, but it is not limited to the two manners.

For the first manner, the reservation bit of the order having an order type of 000 is served as the bit of activating or deactivating the HS-SCCH less operation mode of this embodiment, and represents or indicates whether to activate or deactivate the HS-SCCH less operation mode.

It is regulated that when the order type is 000, and the bit of activating or deactivating the HS-SCCH less operation mode is set to the value indicating performing the activation, for example, a first value, the order of activating the HS-SCCH less operation mode is represented.

When the order type is 000, and the bit of activating or deactivating the HS-SCCH less operation mode is set to the value being different from the value indicating performing the activation, for example, a value different from the first value indicating performing the activation, the order of deactivating the HS-SCCH less operation mode is represented.

Usually, the bit set to "1" represents that a certain function is activated, and the bit set to "0" represents that a certain function is deactivated. Therefore, the first value may be "1", and correspondingly, the value being different from the first value may be "0".

In this manner, Xhap,1, Xhap,2, Xhap,3, Xrv,1 Xrv,2, Xrv,3 are set to "000**1", which represents the order of activating the HS-SCCH less operation mode.

Xhap,1, Xhap,2, Xhap,3, Xrv,1 Xrv,2, Xrv,3 are set to "000**0", which represents the order of deactivating the HS-SCCH less operation mode.

The "*" represents a random value.

Of course, the manner of setting the bits may be inversed.

For example, Xhap,1, Xhap,2, Xhap,3, Xrv,1 Xrv,2, Xrv,3 are set to "000**0", which represents the order of activating the HS-SCCH less operation mode.

Xhap,1, Xhap,2, Xhap,3, Xrv,1, Xrv,2, Xrv,3 are set to "000**1", which represents the order of deactivating the HS-SCCH less operation mode.

For the second manner, one order type is increased, and the bit for activating or deactivating the HS-SCCH less operation mode is set in the added order type.

For example, an order type 001 may be increased, and Xord,1 under this order type serves as the bit of activating or deactivating the HS-SCCH less operation mode.

It is regulated that when the order type is 001, and the bit of activating or deactivating the HS-SCCH less operation mode is set to the value indicating performing the activation, for example, a second value, the order of activating the HS-SCCH less operation mode is represented.

When the order type is 001, and the bit of activating or deactivating the HS-SCCH less operation mode is set to the value being different from the value indicating performing the activation, for example, a value different from the second value indicating performing the activation, the order of deactivating the HS-SCCH less operation mode is represented.

Similarly, the second value may be "1", and the value being different from the second value may be "0".

In this manner, Xhap,1, Xhap,2, Xhap,3, Xrv,1 Xrv,2, Xrv,3 are set to "0011**", which represents the order of activating the HS-SCCH less operation mode.

Xhap,1, Xhap,2, Xhap,3, Xrv,1 Xrv,2, Xrv,3 are set to "0010**", which represents the order of deactivating the HS-SCCH less operation mode.

In step 102, when the UE in the HSDPA system has the HS-SCCH less operation function, that is, the UE is configured as HS-SCCH_less mode=1, if the HS-SCCH less operation mode needs to be activated, the process proceeds to step 103, and if the HS-SCCH less operation mode needs to be deactivated, the process proceeds to step 105.

For the particular operation, for example, it is determined whether the activation state of the current HS-SCCH less operation mode of the UE needs to be changed or not. If the activation state of the current HS-SCCH less operation mode needs to be changed, it is determined whether the HS-SCCH less operation mode needs to be activated or deactivated. If the HS-SCCH less operation mode needs to be activated, the process proceeds to step 103. If the HS-SCCH less operation mode needs to be deactivated, the process proceeds to step 105. Further, if it is determined that the activation state of the HS-SCCH less operation mode needs not to be changed, the subsequent processing is not performed.

In step 103, the base station transmits the physical layer signaling for activating the HS-SCCH less operation mode to the UE.

In this step, the base station transmits the physical layer signaling for activating the HS-SCCH less operation mode to the UE, according to the setting in step 101.

In step 104, the UE performs the corresponding activation configuration according to the physical layer signaling for activating the HS-SCCH less operation mode from the base station; the process proceeds to step 107.

An HS-SCCH less operation mode indication bit may be set in the UE, so as to instruct the UE to activate or deactivate the HS-SCCH less operation mode, and different values of the indication bit indicate the activation states of the current HS-SCCH less operation mode of the UE. The indication bit may be a Boolean variable, and different Boolean values indicate the activation states of the current HS-SCCH less operation mode. The indication bit may also be a common variable, and different values indicate the activation states of the current HS-SCCH less operation mode.

For example, a Boolean variable HS-SCCH_less mode activation may be set.

It is appointed that when HS-SCCH_less mode activation=true, it represents that the current HS-SCCH less operation mode is the activation state.

When HS-SCCH_less mode activation=false, it represents that the current HS-SCCH less operation mode is the deactivation state.

Here, the operation of "performing the corresponding activation configuration" in this step may be setting the HS-SCCH_less mode activation to "true".

In step 105, the base station transmits the physical layer signaling for deactivating the HS-SCCH less operation mode to the UE.

In this step, the base station transmits the physical layer signaling for deactivating the HS-SCCH less operation mode to the UE according to the setting in step 101

In step 106, the UE performs the corresponding deactivation configuration according to the physical layer signaling for deactivating the HS-SCCH less operation mode from the base station.

Referring to the setting in step 104, the operation of "performing the corresponding deactivation configuration" may be setting the HS-SCCH_less mode activation to "false".

In step 107, the UE returns the acknowledgement message ACK to the base station, after the base station receives the ACK, the activation or deactivation configuration is effective, that is, the HS-SCCH less operation mode of the base station side is activated or deactivated corresponding to the physical layer signaling transmitted to the UE. Then, the HSDPA system works according to the configuration state. In addition, the UE returns a non-acknowledgement message NACK to the base station, after the base station receives the NACK message, the activation state of the HS-SCCH less operation mode of the base station side is not changed, that is, the activation or deactivation configuration is not effective, and the HSDPA system works according to the original state.

In this step, the UE returns the ACK to the UE through the HS-DPCCH, so as to represent that the UE side correspondingly sets the activation state of the HS-SCCH less operation mode. The HS-DPCCH is an uplink dedicated physical channel introduced by the HSDPA technique, and is configured to bear three types of physical layer signals including ACK, NACK, and CQI.

During the practical application, the UE may also not return the ACK to the base station, but enables the activation or deactivation configuration to become effective according to the manner as follows.

For example, an effective time is pre-appointed, after the base station transmits the physical layer signaling for activating or deactivating the HS-SCCH less operation mode, a timer having a timing length being the effective time may be started. The physical layer signaling transmitted from the base station includes time stamp information, after the UE receives the physical layer signaling transmitted from the base station, the timer having the timing length being "effective time - (current time - time represented by the time stamp information)" is started according to the current time, the time stamp information in the physical layer signaling, and the pre-appointed effective time, and when the respective timer is time out, it is considered that the effective time is reached, so the activation or deactivation configuration is effective.

During the practical application, in step 103 or 105, upon receiving the physical layer signaling of the base station, the UE returns the ACK to the base station, then the activation or deactivation configuration of the UE side is performed, and the configuration immediately becomes effective or becomes effective after waiting for a certain period of time.

During the practical application, the physical layer signaling for activating or deactivating the HS-SCCH less operation mode may not be preset, but the physical layer signaling for activating the HS-SCCH less operation mode is generated before step 104, or the physical layer signaling for deactivating the HS-SCCH less operation mode is generated before step 106. That is, the corresponding physical layer signaling is generated when the activation state of the HS-SCCH less operation mode of the HSDPA system needs to be changed. For the manner of generating the physical layer signaling for activating or deactivating the HS-SCCH less operation mode, please refer to the setting manner of step 101.

It can be known from the technical solution that the technical solution of controlling the working mode of the HSDPA system in the present invention is realized through the physical layer signaling. When the activation state of the HS-SCCH less operation mode needs to be changed, the preset physical layer signaling for activating or deactivating the HS-SCCH less operation mode is directly transmitted to the UE, and the UE activates or deactivates the HS-SCCH less operation mode of the UE side, according to the physical layer signaling for activating or deactivating the HS-SCCH less operation mode. As compared with the solution in the prior art that the HSDPA system is made to enter or exit the HS-SCCH less operation mode by adopting the high-level signaling, the solution of the present invention that the HS-SCCH less operation mode is activated or deactivated by adopting the physical layer signaling has a higher speed, so as to quickly control the working mode of the HSDPA system, so that when the NodeB determines to deactivate the HS-SCCH less operation mode, the UE may quickly know the activation state of the HS-SCCH less operation mode of the NodeB side, thereby preventing the meaningless complex determination, and saving the processing resources of the UE. On the other hand, air interface resources are further saved in the configuration adopting the physical layer signaling as compared with the configuration adopting the high-level signaling interaction.

The present invention further provides a method for controlling the working mode of the HSDPA system of the UE side. In this method, the physical layer signaling for activating or deactivating the HS-SCCH less operation mode from the network side is received, and the HS-SCCH less operation mode is activated or deactivated according to the received physical layer signaling for activating or deactivating the HS-SCCH less operation mode. The particular realization manner may, for example, include the steps as follows.

In step 201, the physical layer signaling for activating or deactivating the HS-SCCH less operation mode from the network side (for example, the base station) is received.

In step 202, a determination is performed according to the physical layer signaling, if it is determined that the HS-SCCH less operation mode needs to be activated, the process proceeds to step 203, and if it is determined that the HS-SCCH less operation mode needs to be deactivated, the process proceeds to step 204.

In step 203, the UE performs the corresponding activation configuration, that is, activates the HS-SCCH less operation mode, according to the physical layer signaling for activating the HS-SCCH less operation mode from the network side.

An HS-SCCH less operation mode indication bit may be preset in the UE, so as to instruct the UE to activate or deactivate the HS-SCCH less operation mode. The indication bit may be a Boolean variable, and different Boolean values indicate the activation states of the current HS-SCCH less operation mode. The indication bit may also be a common variable, and different values indicate the activation states of the current HS-SCCH less operation mode. For the particular setting process, please refer to the realizing method according to the embodiment as shown in FIG. 1.

For example, a Boolean variable HS-SCCH_less mode activation may be set.

It is appointed that when HS-SCCH_less mode activation=true, it represents that the current HS-SCCH less operation mode is the activation state.

When HS-SCCH_less mode activation=false, it represents that the current HS-SCCH less operation mode is the deactivation state.

The operation of "performing the corresponding activation configuration" in the step may be setting the HS-SCCH less operation mode indication bit to the value indicating performing the activation according to the physical layer signaling. For example, the HS-SCCH_less mode activation is set to "true".

In step 204, the UE performs the corresponding deactivation configuration according to the physical layer signaling for deactivating the HS-SCCH less operation mode from the network side, so as to deactivate the HS-SCCH less operation mode.

Referring to the setting in step 203, in this step, the operation of "performing the corresponding deactivation configuration" on the HS-SCCH less operation mode includes the processes. According to the physical layer signaling, the HS-SCCH less operation mode indication bit is set to the value being different from the value indicating performing the activation, and the HS-SCCH less operation mode is deactivated according to the deactivation indication of the indication bit, for example, the HS-SCCH_less mode activation is set to "false".

After the HS-SCCH less operation mode is activated or deactivated, the method further includes the steps as follows.

In step 205, the acknowledgement message ACK is given as a feedback to the network side, so that the configuration with respect to the activation state of the HS-SCCH less operation mode becomes effective, in which giving the ACK to the network side as the feedback represents that the UE side correspondingly sets the activation state of the HS-SCCH less operation mode.

During the practical application, upon receiving the physical layer signaling of the network side, the UE returns the ACK to the base station, then the activation or deactivation configuration is performed on the UE side, and the configuration immediately becomes effective or becomes effective after waiting for a certain period of time.

During the practical application, the UE may also not return the ACK to the base station, but enable the activation or deactivation configuration to become effective according to the manner as follows.

For example, an effective time is pre-appointed, after the base station transmits the physical layer signaling for activating or deactivating the HS-SCCH less operation mode, a timer having a timing length being the effective time may be started. The physical layer signaling transmitted from the base station includes time stamp information, and after the UE receives the physical layer signaling transmitted from the base station, the timer having the timing length being "effective time - (current time - time represented by the time stamp information)" is started according to the current time, the time stamp information in the physical layer signaling, and the pre-appointed effective time. When the respectively timer is time out, it is considered that the effective time is reached, and the activation or deactivation configuration is effective.

The particular implementation manner of the network side equipment according to the present invention, for example, the base station, the UE, and the HSDPA system is described with reference to the accompanying drawings.

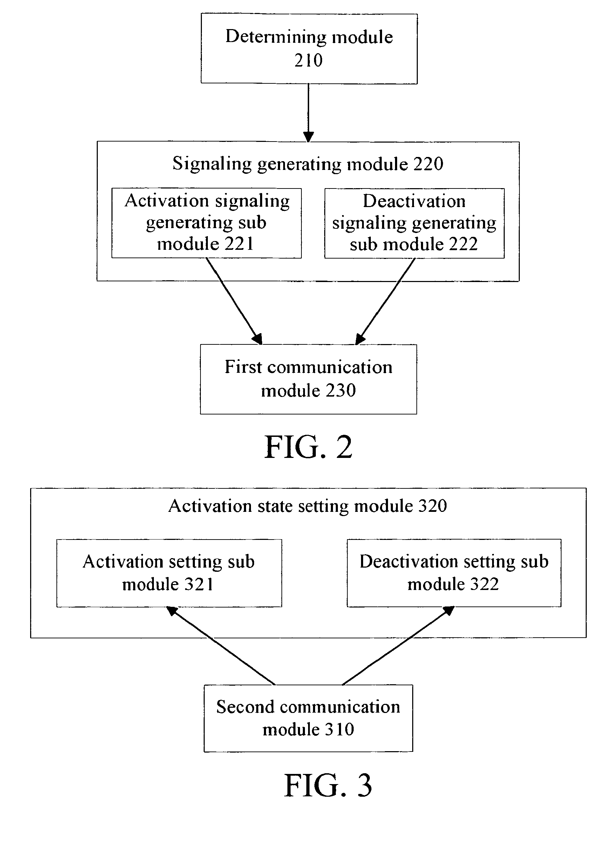

Referring to FIG. 2, a schematic structural view of the network side equipment (base station) for controlling the working mode of the HSDPA system according to the present invention is shown. The network side equipment (base station) includes a determining unit 210, signaling generating unit 220, and a first communication unit 230.

The determining unit 210 is configured to determine whether the activation state of the HS-SCCH less operation mode of the HSDPA system needs to be changed or not.

The signaling generating unit 220 is configured to generate a physical layer signaling or invoke the preset physical layer signaling for activating or deactivating the HS-SCCH less operation mode, when the activation state of the HS-SCCH less operation mode needs to be changed.

The first communication unit 230 is configured to transmit the physical layer signaling for activating or deactivating the HS-SCCH less operation mode to a UE, so as to instruct the UE to activate or deactivate the HS-SCCH less operation mode.

The signaling generating unit 220 as shown in FIG. 2 includes at least one sub unit, namely, an activation signaling generating sub unit 221 or a deactivation signaling generating sub unit 222. The activation signaling generating sub unit 221 is configured to generate a physical layer signaling or invoke the preset physical layer signaling for activating the HS-SCCH less operation mode, when the HS-SCCH less operation mode needs to be activated. The deactivation signaling generating sub unit 222 is configured to generate a physical layer signaling or invoke the preset physical layer signaling for deactivating the HS-SCCH less operation mode, when the HS-SCCH less operation mode of the HSDPA system needs to be deactivated.

The particular manner of constructing the physical layer signaling for activating or deactivating the HS-SCCH less operation mode may be obtained with reference to the embodiment of the method, so it is not repeated here.

In the network equipment according to the present invention, the first communication unit is further configured to receive the acknowledgement message ACK or NACK as the feedback given by the UE. If the ACK is received, the activation or deactivation operation is performed on the HS-SCCH less operation mode of the base station side corresponding to the physical layer signaling transmitted to the UE, according to the received ACK.

Referring to FIG. 3, a schematic structural view of the UE for controlling the working mode of the HSDPA system according to the present invention is shown. The UE includes a second communication unit 310 and an activation state setting unit 320.

The second communication unit 310 is configured to receive the physical layer signaling for activating or deactivating the HS-SCCH less operation mode from the network side (for example, base station).

The activation state setting unit 320 is configured to activate or deactivate the HS-SCCH less operation mode, according to the physical layer signaling for activating or deactivating the HS-SCCH less operation mode.

The HS-SCCH less operation mode indication bit may be preset in the UE, so as to instruct the UE to activate or deactivate the HS-SCCH less operation mode. The activation state setting unit 320 as shown in FIG. 3 includes at least one sub unit, namely, an activation setting sub unit 321 or a deactivation setting sub unit 322.

The activate setting sub unit 321 is configured to set the activation or deactivation indication bit of the HS-SCCH less operation mode to the value indicating performing the activation, according to the physical layer signaling for activating the HS-SCCH less operation mode, and activate the HS-SCCH less operation mode according to the activation indication of the indication bit. The deactivation setting sub unit 322 is configured to set the activation or deactivation indication bit of the HS-SCCH less operation mode to the value being different from the value indicating performing the activation, according to the physical layer signaling for deactivating the HS-SCCH less operation mode, and deactivating the HS-SCCH less operation mode according to the deactivation indication of the indication bit.

The particular manner of setting the activation or deactivation indicator may be obtained with reference to the embodiment of the method, and it is not repeated herein.

In the UE according to the present invention, the second communication unit 310 is further configured to return the acknowledgement message ACK to the network side. For example, the second communication unit 310 returns the ACK to the network side before or after the activation state executing unit 320 activates or deactivates the HS-SCCH less operation mode.

The HSDPA system according to the present invention includes the network side equipment and the UE in the above embodiment.

It may be known from the embodiment that the technical solution of controlling the working mode of the HSDPA system in the present invention is realized through the physical layer signaling. When the activation state of the HS-SCCH less operation mode needs to be changed, the physical layer signaling for activating or deactivating the HS-SCCH less operation mode is transmitted to the UE, the UE activates or deactivates the HS-SCCH less operation mode of the UE side, according to the physical layer signaling for activating or deactivating the HS-SCCH less operation mode. The physical layer signaling for activating or deactivating the HS-SCCH less operation mode may be preset and may also be generated after it is determined that the activation state of the HS-SCCH less operation mode needs to be changed. As compared with the solution in the prior art that the HSDPA system is made to enter or exit the HS-SCCH less operation mode by adopting the high-level signaling, the solution of the present invention that the HS-SCCH less operation mode is activated or deactivated by adopting the physical layer signaling has a higher speed, so as to quickly control the working mode of the HSDPA system, so that when the network side, for example, the NodeB, determines to deactivate the HS-SCCH less operation mode, the UE may quickly know the activation state of the HS-SCCH less operation mode of the current NodeB side, thereby preventing the meaningless complex determination, and saving the processing resources of the UE. On the other hand, the air interface resources are further saved in the configuration adopting the physical layer signaling as compared with the configuration adopting the high-level signaling interaction.

It may be understood by those of ordinary skill that the process of controlling the working mode of the HS-SCCH in the method according to the above embodiment may be finished through relevant hardware instructed by a program, in which the program may be stored in a readable storage medium of the base station and the UE, and the corresponding steps in the method are executed when the program is executed. The storage medium may be, for example, a read only memory (ROM)/random access memory (RAM), a magnetic disk, and an optical disk, etc.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A method for use in a network side equipment, for controlling working mode of high speed downlink packet access, HSDPA, system, comprising:
determining(102) whether an activation state of a high speed shared control channel, HS-SCCH, less operation mode of the HSDPA system needs to be changed;
transmitting(103, 105) a physical layer signaling to a User Equipment, UE, to instruct the UE to activate or deactivate the HS-SCCH less operation mode if the activation state of the HS-SCCH less operation mode needs to be changed,
wherein the physical layer signaling is preset or the physical layer signaling is generated after determining that the activation state of the HS-SCCH less operation mode needs to be changed;
wherein the physical layer signaling is an HS-SCCH order for activating or deactivating the HS-SCCH less operation mode in HS-SCCH order, wherein
the HS-SCCH order having order type of 000 and having a bit of activating or deactivating the HS-SCCH less operation mode set to a value indicating performing activation is served as an order of activating the HS-SCCH less operation mode; and
the HS-SCCH order having order type of 000 and having the bit of activating or deactivating the HS-SCCH less operation mode set to a value different from the value indicating performing activation is served as an order of deactivating the HS-SCCH less operation mode.

2. The method according to claim 1, wherein the physical layer signaling is an HS-SCCH order indicating activating or deactivating of HS-SCCH less operation mode, wherein order type of the HS-SCCH order is set to 000 and an Xord,3 bit of the HS-SCCH order is set to 1 to activate the HS-SCCH less operation mode or set to 0 to deactivate the HS-SCCH less operation mode.

3. The method according to any one of claims 1 to 2, wherein after transmitting the physical layer signaling, the method further comprises:
receiving(107) an acknowledgement message, ACK, or a non-acknowledgement message, NACK, from the UE; and
activating or deactivating(107) the HS-SCCH less operation mode of a base station side corresponding to the physical layer signaling transmitted to the UE, if the ACK is received.

4. A network side equipment, comprising:
a determining unit (210), configured to determine whether an activation state of an HS-SCCH less operation mode of an HSDPA system needs to be changed;
a signaling generating unit (220), configured to generate a physical layer signaling or invoke a preset physical layer signaling for activating or deactivating the HS-SCCH less operation mode, when the activation state of the HS-SCCH less operation mode needs to be changed; and
a first communication unit (230), configured to transmit the physical layer signaling for activating or deactivating the HS-SCCH less operation mode to a UE to instruct the UE to activate or deactivate the HS-SCCH less operation mode;
wherein the physical layer signaling is an HS-SCCH order for activating or deactivating the HS-SCCH less operation mode in HS-SCCH order, wherein
the HS-SCCH order having order type of 000 and having a bit of activating or deactivating the HS-SCCH less operation mode set to a value indicating performing activation is served as an order of activating the HS-SCCH less operation mode; and
the HS-SCCH order having order type of 000 and having the bit of activating or deactivating the HS-SCCH less operation mode set to a value different from the value indicating performing activation is served as an order of deactivating the HS-SCCH less operation mode.

5. The network side equipment according to claim 4, wherein the physical layer signaling is an HS-SCCH order indicating activating or deactivating of HS-SCCH less operation mode, wherein order type of the HS-SCCH order is set to 000 and an Xord,3 bit of the HS-SCCH order is set to 1 to activate the HS-SCCH less operation mode or set to 0 to deactivate the HS-SCCH less operation mode.

6. The network side equipment according to claim 4, wherein signaling generating unit comprises at least one of following sub-units:
an activation signaling generating sub unit (221), configured to generate a physical layer signaling or invoke a preset physical layer signaling for activating the HS-SCCH less operation mode, when the HS-SCCH less operation mode needs to be activated;
a deactivation signaling generating sub unit (222), configured to generate a physical layer signaling or invoke the preset physical layer signaling for deactivating the HS-SCCH less operation mode, when the HS-SCCH less operation mode of the HSDPA system needs to be deactivated.

7. The network side equipment according to claim 4 or 6, wherein the network side equipment is a base station.

8. The network side equipment according to any one of claims 4 to 7, wherein the first communication unit is further configured to
receive(107) an acknowledgement message, ACK, or a non-acknowledgement message, NACK, from the UE; and
activate or deactivate(107) the HS-SCCH less operation mode of a network side corresponding to the physical layer signaling transmitted to the UE according to the ACK, if the ACK is received.

9. A method for use in a user equipment, UE, for controlling a working mode of an HSDPA system, comprising:
A receiving(103, 105) a physical layer signaling for activating or deactivating an HS-SCCH less operation mode from a network side; and
activating(104, 106) the HS-SCCH less operation mode according to the physical layer signaling for activating the HS-SCCH less operation mode or deactivating the HS-SCCH less operation mode according to the physical layer signaling for deactivating the HS-SCCH less operation mode;
wherein the physical layer signaling is an HS-SCCH order for activating or deactivating the HS-SCCH less operation mode in HS-SCCH order, wherein
the HS-SCCH order having order type of 000 and having a bit of activating or deactivating the HS-SCCH less operation mode set to a value indicating performing activation is served as an order of activating the HS-SCCH less operation mode; and
the HS-SCCH order having order type of 000 and having the bit of activating or deactivating the HS-SCCH less operation mode set to a value different from the value indicating performing activation is served as an order of deactivating the HS-SCCH less operation mode.

10. The method according to claim 9, wherein the physical layer signaling is an HS-SCCH order indicating activating or deactivating of HS-SCCH less operation mode, wherein order type of the HS-SCCH order is set to 000 and an Xord,3 bit of the HS-SCCH order is set to 1 to activate the HS-SCCH less operation mode or set to 0 to deactivate the HS-SCCH less operation mode.

11. The method according to claim 9, wherein the method further comprises:
presetting(104, 106) an HS-SCCH less operation mode indication bit in a UE to instruct the UE to activate or deactivate the HS-SCCH less operation mode, and wherein
the activating(104, 106) the HS-SCCH less operation mode comprises: setting the HS-SCCH less operation mode indication bit to a value indicating performing the activation according to the physical layer signaling, and activating the HS-SCCH less operation mode according to an activation indication of the indication bit; and
the deactivating(104, 106) the HS-SCCH less operation mode comprises: setting the HS-SCCH less operation mode indication bit to a value being different from the value indicating performing the activation according to the physical layer signaling, and deactivating the HS-SCCH less operation mode according to a deactivation indication of the indication bit.

12. The method according to claim 9 or 11, wherein before the activating the HS-SCCH less operation mode or deactivating the HS-SCCH less operation mode, the method further comprises:
returning(107), by the UE, an acknowledgement message, ACK, to the network side.

13. A User Equipment, UE, comprising:
a second communication unit(310), configured to receive a physical layer signaling for activating or deactivating an HS-SCCH less operation mode from a network side; and
an activation state setting unit(320), configured to activate or deactivate the HS-SCCH less operation mode, according to the physical layer signaling for activating or deactivating the HS-SCCH less operation mode;
wherein the physical layer signaling is an HS-SCCH order for activating or deactivating the HS-SCCH less operation mode in HS-SCCH order, wherein
the HS-SCCH order having order type of 000 and having a bit of activating or deactivating the HS-SCCH less operation mode set to a value indicating performing activation is served as an order of activating the HS-SCCH less operation mode; and
the HS-SCCH order having order type of 000 and having the bit of activating or deactivating the HS-SCCH less operation mode set to a value different from the value indicating performing activation is served as an order of deactivating the HS-SCCH less operation mode.

14. The UE according to claim 13, wherein the physical layer signaling is an HS-SCCH order indicating activating or deactivating of HS-SCCH less operation mode, wherein order type of the HS-SCCH order is set to 000 and an Xord,3 bit of the HS-SCCH order is set to 1 to activate the HS-SCCH less operation mode or set to 0 to deactivate the HS-SCCH less operation mode.

15. The UE according to claim 13, wherein an HS-SCCH less operation mode indication bit is preset in the UE to instruct to activate or deactivate the HS-SCCH less operation mode and the activation state setting unit(320) at least comprises one of an activation setting sub unit(321) or a deactivation setting sub unit(322), wherein
the activate setting sub unit(321) is configured to set the indication bit of the HS-SCCH less operation mode to a value indicating performing the activation according to the physical layer signaling, and activate the HS-SCCH less operation mode according to an activation indication of the indication bit; and
the deactivation setting sub unit(322) is configured to set the indication bit of the HS-SCCH less operation mode to a value being different from the value indicating performing the activation, according to the physical layer signaling for deactivating the HS-SCCH less operation mode, and deactivate the HS-SCCH less operation mode according to a deactivation indication of the indication bit.

16. The UE according to claim 13 or 15, wherein the second communication unit(310) is further configured to return an ACK to the network side.

17. An HSDPA system, comprising:
a network side equipment according to any one of claims 4 to 8; and
a UE according to any one of claims 13 to 16.

## Patentansprüche

1. Verfahren zur Verwendung in einem netzseitigen Gerät zur Steuerung des Arbeitsmodus eines "High Speed Downlink Packet Access"-Systems, HSDPA-Systems, umfassend:
Bestimmen (102), ob ein Aktivierungszustand eines "High Speed Shared Control Channel"-losen Betriebsmodus, HS-SCCH-losen Betriebsmodus, des HSDPA-Systems geändert werden muss;
Senden (103, 105) einer Bitübertragungsschicht-Signalisierung zu einem Benutzergerät (User Equipment, UE) um das UE anzuweisen, den HS-SCCH-losen Betriebsmodus zu aktivieren oder zu deaktivieren, wenn der Aktivierungszustand des HS-SCCH-losen Betriebsmodus geändert werden muss,
wobei die Bitübertragungsschicht-Signalisierung voreingestellt ist oder die Bitübertragungsschicht-Signalisierung erzeugt wird, nachdem bestimmt wird, dass der Aktivierungszustand des HS-SCCH-losen Betriebsmodus geändert werden muss;
wobei die Bitübertragungsschicht-Signalisierung eine HS-SCCH-Anordnung zum Aktivieren oder Deaktivieren des HS-SCCH-losen Betriebsmodus in HS-SCCH-Anordnung ist, wobei
die HS-SCCH-Anordnung den Anordnungstyp 000 aufweist und ein Bit des Aktivierens oder Deaktivierens des HS-SCCH-losen Betriebsmodus aufweist, das auf einen Wert gesetzt ist, der angibt, dass Aktivierungsdurchführung als eine Anordnung zum Aktivieren des HS-SCCH-losen Betriebsmodus gebraucht wird; und
die HS-SCCH-Anordnung den Anordnungstyp 000 aufweist und das Bit des Aktivierens oder Deaktivierens des HS-SCCH-losen Betriebsmodus aufweist, das auf einen Wert gesetzt ist, der von dem Wert verschieden ist, der angibt, dass Aktivierungsdurchführung als eine Anordnung zum Deaktivieren des HS-SCCH-losen Betriebsmodus gebraucht wird.

2. Verfahren nach Anspruch 1, wobei die Bitübertragungsschicht-Signalisierung eine HS-SCCH-Anordnung ist, die Aktivierung oder Deaktivierung des HS-SCCH-losen Betriebsmodus angibt, wobei der Anordnungstyp der HS-SCCH-Anordnung auf 000 gesetzt wird und ein Xord,3-Bit der HS-SCCH-Anordnung auf 1 gesetzt wird, um den HS-SCCH-losen Betriebsmodus zu aktivieren, ober auf 0 gesetzt wird, um den HS-SCCH-losen Betriebsmodus zu deaktivieren.

3. Verfahren nach einem der Ansprüche 1 bis 2, wobei das Verfahren nach dem Senden der Bitübertragungsschicht-Signalisierung ferner Folgendes umfasst:
Empfangen (107) einer Bestätigungsnachricht, ACK, oder einer Nichtbestätigungsnachricht, NACK, von dem UE; und
Aktivieren oder Deaktivieren (107) des HS-SCCH-losen Betriebsmodus einer Basisstationsseite entsprechend der zu dem UE gesendeten Bitübertragungsschicht-Signalisierung, wenn die ACK empfangen wird.

4. Netzseitiges Gerät, umfassend:
eine Bestimmungseinheit (210), ausgelegt zum Bestimmen, ob ein Aktivierungszustand eines HS-SCCH-losen Betriebsmodus eines HSDPA-Systems geändert werden muss;
eine Signalisierungserzeugungseinheit (220), ausgelegt zum Erzeugen einer Bitübertragungsschicht-Signalisierung oder Aufrufen einer voreingestellten Bitübertragungsschicht-Signalisierung zum Aktivieren oder Deaktivieren des HS-SCCH-losen Betriebsmodus, wenn der Aktivierungszustand des HS-SCCH-losen Betriebsmodus geändert werden muss; und
eine erste Kommunikationseinheit (230), ausgelegt zum Senden der Bitübertragungsschicht-Signalisierung zum Aktivieren oder Deaktivieren des HS-SCCH-losen Betriebsmodus zu einem UE, um das UE anzuweisen, den HS-SCCH-losen Betriebsmodus zu aktivieren oder zu deaktivieren;
wobei die Bitübertragungsschicht-Signalisierung eine HS-SCCH-Anordnung zum Aktivieren oder Deaktivieren des HS-SCCH-losen Betriebsmodus in HS-SCCH-Anordnung ist, wobei
die HS-SCCH-Anordnung den Anordnungstyp 000 aufweist und ein Bit des Aktivierens oder Deaktivierens des HS-SCCH-losen Betriebsmodus aufweist, das auf einen Wert gesetzt ist, der angibt, dass Aktivierungsdurchführung als eine Anordnung zum Aktivieren des HS-SCCH-losen Betriebsmodus gebraucht wird; und
die HS-SCCH-Anordnung den Anordnungstyp 000 aufweist und das Bit des Aktivierens oder Deaktivierens des HS-SCCH-losen Betriebsmodus aufweist, das auf einen Wert gesetzt ist, der von dem Wert verschieden ist, der angibt, dass Aktivierungsdurchführung als eine Anordnung zum Deaktivieren des HS-SCCH-losen Betriebsmodus gebraucht wird.

5. Netzseitiges Gerät nach Anspruch 4, wobei die Bitübertragungsschicht-Signalisierung eine HS-SCCH-Anordnung ist, die Aktivierung oder Deaktivierung des HS-SCCH-losen Betriebsmodus angibt, wobei der Anordnungstyp der HS-SCCH-Anordnung auf 000 gesetzt wird und ein Xord,3-Bit der HS-SCCH-Anordnung auf 1 gesetzt wird, um den HS-SCCH-losen Betriebsmodus zu aktivieren, oder auf 0 gesetzt wird, um den HS-SCCH-losen Betriebsmodus zu deaktivieren.

6. Netzseitiges Gerät nach Anspruch 4, wobei die Signalisierungserzeugungseinheit mindestens eine der folgenden Subeinheiten umfasst:
eine Aktivierungssignalisierungserzeugungs-Subeinheit (221), ausgelegt zum Erzeugen einer Bitübertragungsschicht-Signalisierung oder Aufrufen einer voreingestellten Bitübertragungsschicht-Signalisierung zum Aktivieren des HS-SCCH-losen Betriebsmodus, wenn der HS-SCCH-lose Betriebsmodus aktiviert werden muss;
eine Deaktivierungssignalisierungserzeugungs-Subeinheit (222), ausgelegt zum Erzeugen einer Bitübertragungsschicht-Signalisierung oder Aufrufen der voreingestellten Bitübertragungsschicht-Signalisierung zum Deaktivieren des HS-SCCH-losen Betriebsmodus, wenn der HS-SCCH-lose Betriebsmodus des HSDPA-Systems deaktiviert werden muss.

7. Netzseitiges Gerät nach Anspruch 4 oder 6, wobei das netzseitige Gerät eine Basisstation ist.

8. Netzseitiges Gerät nach einem der Ansprüche 4 bis 7, wobei die erste Kommunikationseinheit ferner ausgelegt ist zum
Empfangen (107) einer Bestätigungsnachricht, ACK, oder einer Nichtbestätigungsnachricht, NACK, von dem UE; und
Aktivieren oder Deaktivieren (107) des HS-SCCH-losen Betriebsmodus einer Netzseite entsprechend der zu dem UE gesendeten Bitübertragungsschicht-Signalisierung gemäß der ACK, wenn die ACK empfangen wird.

9. Verfahren zur Verwendung in einem Benutzergerät, UE, zum Steuern eines Arbeitsmodus eines HSDPA-Systems, umfassend:
Empfangen (103, 105) einer Bitübertragungsschicht-Signalisierung zum Aktivieren oder Deaktivieren eines HS-SCCH-losen Betriebsmodus von einer Netzseite; und
Aktivieren (104, 106) des HS-SCCH-losen Betriebsmodus gemäß der Bitübertragungsschicht-Signalisierung zum Aktivieren des HS-SCCH-losen Betriebsmodus oder Deaktivieren des HS-SCCH-losen Betriebsmodus gemäß der Bitübertragungsschicht-Signalisierung zum Deaktivieren des HS-SCCH-losen Betriebsmodus;
wobei die Bitübertragungsschicht-Signalisierung eine HS-SCCH-Anordnung zum Aktivieren oder Deaktivieren des HS-SCCH-losen Betriebsmodus in HS-SCCH-Anordnung ist, wobei
die HS-SCCH-Anordnung den Anordnungstyp 000 aufweist und ein Bit des Aktivierens oder Deaktivierens des HS-SCCH-losen Betriebsmodus aufweist, das auf einen Wert gesetzt ist, der angibt, dass Aktivierungsdurchführung als eine Anordnung zum Aktivieren des HS-SCCH-losen Betriebsmodus gebraucht wird; und
die HS-SCCH-Anordnung den Anordnungstyp 000 aufweist und das Bit des Aktivierens oder Deaktivierens des HS-SCCH-losen Betriebsmodus aufweist, das auf einen Wert gesetzt ist, der von dem Wert verschieden ist, der angibt, dass Aktivierungsdurchführung als eine Anordnung zum Deaktivieren des HS-SCCH-losen Betriebsmodus gebraucht wird.

10. Verfahren nach Anspruch 9, wobei die Bitübertragungsschicht-Signalisierung eine HS-SCCH-Anordnung ist, die Aktivierung oder Deaktivierung des HS-SCCH-losen Betriebsmodus angibt, wobei der Anordnungstyp der HS-SCCH-Anordnung auf 000 gesetzt wird und ein Xord,3-Bit der HS-SCCH-Anordnung auf 1 gesetzt wird, um den HS-SCCH-losen Betriebsmodus zu aktivieren, ober auf 0 gesetzt wird, um den HS-SCCH-losen Betriebsmodus zu deaktivieren.

11. Verfahren nach Anspruch 9, wobei das Verfahren ferner Folgendes umfasst:
Voreinstellen (104, 106) eines Angabebit des HS-SCCH-losen Betriebsmodus in einem UE, um das UE anzuweisen, den HS-SCCH-losen Betriebsmodus zu aktivieren oder zu deaktivieren, und wobei
das Aktivieren (104, 106) des HS-SCCH-losen Betriebsmodus Folgendes umfasst: Setzen des Angabebit des HS-SCCH-losen Betriebsmodus auf einen Wert, der Durchführung der Aktivierung gemäß der Bitübertragungsschicht-Signalisierung angibt, und Aktivieren des HS-SCCH-losen Betriebsmodus gemäß einer Aktivierungsangabe des Angabebit; und das Deaktivieren (104, 106) des HS-SCCH-losen Betriebsmodus Folgendes umfasst:
Setzen des Angabebit des HS-SCCH-losen Betriebsmodus auf einen Wert, der von dem Wert verschieden ist, der Durchführung der Aktivierung gemäß der Bitübertragungsschicht-Signalisierung angibt, und Deaktivieren des HS-SCCH-losen Betriebsmodus gemäß einer Deaktivierungsangabe des Angabebit.

12. Verfahren nach Anspruch 9 oder 11, wobei das Verfahren vor dem Aktivieren des HS-SCCH-losen Betriebsmodus oder Deaktivieren des HS-SCCH-losen Betriebsmodus ferner Folgendes umfasst:
Zurückgeben (107) einer Bestätigungsnachricht, ACK, an die Netzseite durch das UE.

13. Benutzergerät, UE, umfassend:
eine zweite Kommunikationseinheit (310), ausgelegt zum Empfangen einer Bitübertragungsschicht-Signalisierung zum Aktivieren oder Deaktivieren eines HS-SCCH-losen Betriebsmodus von einer Netzseite; und
eine Aktivierungszustands-Setzeinheit (320), ausgelegt zum Aktivieren oder Deaktivieren des HS-SCCH-losen Betriebsmodus gemäß der Bitübertragungsschicht-Signalisierung zum Aktivieren oder Deaktivieren des HS-SCCH-losen Betriebsmodus;
wobei die Bitübertragungsschicht-Signalisierung eine HS-SCCH-Anordnung zum Aktivieren oder Deaktivieren des HS-SCCH-losen Betriebsmodus in HS-SCCH-Anordnung ist, wobei
die HS-SCCH-Anordnung den Anordnungstyp 000 aufweist und ein Bit des Aktivierens oder Deaktivierens des HS-SCCH-losen Betriebsmodus aufweist, das auf einen Wert gesetzt ist, der angibt, dass Aktivierungsdurchführung als eine Anordnung zum Aktivieren des HS-SCCH-losen Betriebsmodus gebraucht wird; und
die HS-SCCH-Anordnung den Anordnungstyp 000 aufweist und das Bit des Aktivierens oder Deaktivierens des HS-SCCH-losen Betriebsmodus aufweist, das auf einen Wert gesetzt ist, der von dem Wert verschieden ist, der angibt, dass Aktivierungsdurchführung als eine Anordnung zum Deaktivieren des HS-SCCH-losen Betriebsmodus gebraucht wird.

14. UE nach Anspruch 13, wobei die Bitübertragungsschicht-Signalisierung eine HS-SCCH-Anordnung ist, die Aktivierung oder Deaktivierung des HS-SCCH-losen Betriebsmodus angibt, wobei der Anordnungstyp der HS-SCCH-Anordnung auf 000 gesetzt wird und ein Xord,3-Bit der HS-SCCH-Anordnung auf 1 gesetzt wird, um den HS-SCCH-losen Betriebsmodus zu aktivieren, ober auf 0 gesetzt wird, um den HS-SCCH-losen Betriebsmodus zu deaktivieren.

15. UE nach Anspruch 13, wobei ein Angabebit des HS-SCCH-losen Betriebsmodus in dem UE voreingestellt wird, um anzuweisen, den HS-SCCH-losen Betriebsmodus zu aktivieren oder zu deaktivieren, und die Aktivierungszustands-Setzeinheit (320) eine Aktivierungssetz-Subeinheit (321) und/oder eine Deaktivierungssetz-Subeinheit (322) umfasst, wobei
die Aktivierungssetz-Subeinheit (321) ausgelegt ist zum Setzen des Angabebit des HS-SCCH-losen Betriebsmodus auf einen Wert, der Durchführen der Aktivierung gemäß der Bitübertragungsschicht-Signalisierung angibt, und zum Aktivieren des HS-SCCH-losen Betriebsmodus gemäß einer Aktivierungsangabe des Angabebit;
und
die Deaktivierungssetz-Subeinheit (322) ausgelegt ist zum Setzen des Angabebit des HS-SCCH-losen Betriebsmodus auf einen Wert, der von dem Wert verschieden ist, der Durchführen der Aktivierung gemäß der Bitübertragungsschicht-Signalisierung zum Deaktivieren des HS-SCCH-losen Betriebsmodus angibt, und zum Deaktivieren des HS-SCCH-losen Betriebsmodus gemäß einer Deaktivierungsangabe des Angabebit.

16. UE nach Anspruch 13 oder 15, wobei die zweite Kommunikationseinheit (310) ferner dafür ausgelegt ist, ein ACK an die Netzseite zurückzugeben.

17. HSDPA-System, umfassend:
ein netzseitiges Gerät nach einem der Ansprüche 4 bis 8; und
ein UE nach einem der Ansprüche 13 bis 16.

## Revendications

1. Procédé destiné à être utilisé dans un équipement côté réseau pour commander un mode de fonctionnement d'un système d'accès par paquets de liaison descendante à haut débit, HSDPA (High Speed Downlink Packet Access), consistant à :
déterminer (102) s'il est nécessaire de modifier un état d'activation d'un mode de fonctionnement sans canal de commande partagé à haut débit, HS-SCCH (High Speed Shared Control Channel) du système HSDPA ;
transmettre (103, 105) une signalisation de couche physique à un Equipement Utilisateur, UE (User Equipment), pour ordonner à l'UE d'activer ou de désactiver le mode de fonctionnement sans HS-SCCH s'il est nécessaire de modifier l'état d'activation du mode de fonctionnement sans HS-SCCH,
dans lequel la signalisation de couche physique est prédéfinie ou la signalisation de couche physique est générée après avoir déterminé qu'il était nécessaire de modifier l'état d'activation du mode de fonctionnement sans HS-SCCH ;
dans lequel la signalisation de couche physique est un ordre HS-SCCH destiné à activer ou désactiver le mode de fonctionnement sans HS-SCCH dans l'ordre HS-SCCH, dans lequel
l'ordre HS-SCCH présente un type d'ordre égal à 000 et présente un bit d'activation ou de désactivation du mode de fonctionnement sans HS-SCCH mis à une valeur indiquant que l'exécution de l'activation est traitée en tant qu'ordre d'activation du mode de fonctionnement sans HS-SCCH ; et
l'ordre HS-SCCH présentant un type d'ordre égal à 000 et présentant le bit d'activation ou de désactivation du mode de fonctionnement sans HS-SCCH mis à une valeur différente de la valeur indiquant l'exécution d'une activation est traité en tant qu'ordre de désactivation du mode de fonctionnement sans HS-SCCH.

2. Procédé selon la revendication 1, dans lequel la signalisation de couche physique est un ordre HS-SCCH indiquant l'activation ou la désactivation du mode de fonctionnement sans HS-SCCH, dans lequel le type d'ordre de l'ordre HS-SCCH est mis à 000 et un bit Xord,3 de l'ordre HS-SCCH est mis à 1 pour activer le mode de fonctionnement sans HS-SCCH ou est mis à 0 pour désactiver le mode de fonctionnement sans HS-SCCH.

3. Procédé selon l'une quelconque des revendications 1 et 2, dans lequel, après la transmission de la signalisation de couche physique, le procédé consiste en outre à :
recevoir (107) un message d'acquittement, ACK, ou un message de non-acquittement, NACK, en provenance de l'UE ; et
l'activation ou la désactivation (107) du mode de fonctionnement sans HS-SCCH d'un côté station de base correspondant à la signalisation de couche physique transmise à l'UE, si l'ACK est reçu.

4. Equipement côté réseau, comprenant :
une unité de détermination (210), configurée pour déterminer s'il est nécessaire de modifier un état d'activation d'un mode d'activation sans HS-SCCH d'un système HSDPA;
une unité génératrice de signalisation (220), configurée pour générer une signalisation de couche physique ou invoquer une signalisation de couche physique prédéfinie destinée à activer ou désactiver le mode de fonctionnement sans HS-SCCH, lorsqu'il est nécessaire de modifier l'état d'activation de fonctionnement sans HS-SCCH ; et
une première unité de communication (230), configurée pour transmettre la signalisation de couche physique pour activer ou désactiver le mode de fonctionnement sans HS-SCCH à un UE afin d'ordonner à l'UE d'activer ou de désactiver le mode de fonctionnement sans HS-SCCH ;
dans lequel la signalisation de couche physique est un ordre HS-SCCH destiné à activer ou désactiver le mode de fonctionnement sans HS-SCCH dans l'ordre HS-SCCH, dans lequel
l'ordre HS-SCCH présentant un type d'ordre égal à 000 et présentant un bit d'activation ou de désactivation du mode de fonctionnement sans HS-SCCH mis à une valeur indiquant l'exécution d'une activation est traité en tant qu'ordre d'activation du mode de fonctionnement sans HS-SCCH ; et
l'ordre HS-SCCH présentant un type d'ordre égal à 000 et présentant le bit d'activation ou de désactivation du mode de fonctionnement sans HS-SCCH mis à une valeur différente de la valeur indiquant l'exécution d'une activation est traité en tant qu'ordre de désactivation du mode de fonctionnement sans HS-SCCH.

5. Equipement côté réseau selon la revendication 4, dans lequel la signalisation de couche physique est un ordre HS-SCCH indiquant l'activation ou la désactivation du mode de fonctionnement sans HS-SCCH, dans lequel le type d'ordre de l'ordre HS-SCCH est mis à 000 et un bit Xord,3 de l'ordre HS-SCCH est mis à 1 pour activer le mode de fonctionnement sans HS-SCCH ou est mis à 0 pour désactiver le mode de fonctionnement sans HS-SCCH.

6. Equipement côté réseau selon la revendication 4, dans lequel l'unité génératrice de signalisation comprend au moins l'une des sous-unités suivantes :
une sous-unité génératrice de signalisation d'activation (221), configurée pour générer une signalisation de couche physique ou invoquer une signalisation de couche physique prédéfinie destinée à activer le mode de fonctionnement sans HS-SCCH lorsqu'il est nécessaire d'activer le mode de fonctionnement sans HS-SCCH ;
une sous-unité génératrice de signalisation de désactivation (222), configurée pour générer une signalisation de couche physique ou invoquer la signalisation de couche physique prédéfinie destinée à désactiver le mode de fonctionnement sans HS-SCCH, lorsqu'il est nécessaire de désactiver le mode de fonctionnement sans HS-SCCH du système HSDPA.

7. Equipement côté réseau selon la revendication 4 ou 6, dans lequel l'équipement côté réseau est une station de base.

8. Equipement côté réseau selon l'une quelconque des revendications 4 à 7, dans lequel la première unité de communication est en outre configurée pour :
recevoir (107) un message d'acquittement, ACK, ou un message de non-acquittement, NACK, en provenance de l'UE ; et
activer ou désactiver (107) le mode de fonctionnement sans HS-SCCH d'un côté réseau correspondant à la signalisation de couche physique transmise à l'UE conformément à l'ACK, si l'ACK est reçu.

9. Procédé destiné à être utilisé dans un équipement utilisateur (UE) pour commander un mode de fonctionnement d'un système HSDPA, consistant à :
recevoir (103, 105) une signalisation de couche physique destinée à activer ou désactiver un mode de fonctionnement sans HS-SCCH en provenance d'un côté réseau ; et
activer (104, 106) le mode de fonctionnement sans HS-SCCH conformément à la signalisation de couche physique destinée à activer le mode de fonctionnement sans HS-SCCH ou désactiver le mode de fonctionnement sans HS-SCCH conformément à la signalisation de couche physique destinée à désactiver le mode de fonctionnement sans HS-SCCH ;
dans lequel la signalisation de couche physique est un ordre HS-SCCH destiné à activer ou désactiver le mode de fonctionnement sans HS-SCCH dans l'ordre HS-SCCH, dans lequel
l'ordre HS-SCCH présentant un type d'ordre égal à 000 et présentant un bit d'activation ou de désactivation du mode de fonctionnement sans HS-SCCH mis à une valeur indiquant l'exécution de l'activation est traité en tant qu'ordre d'activation du mode de fonctionnement sans HS-SCCH ; et
l'ordre HS-SCCH présentant un type d'ordre égal à 000 et présentant le bit d'activation ou de désactivation du mode de fonctionnement sans HS-SCCH mis à une valeur différente de la valeur indiquant l'exécution d'une activation est traité en tant qu'ordre de désactivation du mode de fonctionnement sans HS-SCCH.

10. Procédé selon la revendication 9, dans lequel la signalisation de couche physique est un ordre HS-SCCH indiquant l'activation ou la désactivation du mode de fonctionnement sans HS-SCCH, dans lequel le type d'ordre de l'ordre HS-SCCH est mis à 000 et un bit Xord,3 de l'ordre HS-SCCH est mis à 1 pour activer le mode de fonctionnement sans HS-SCCH ou est mis à 0 pour désactiver le mode de fonctionnement sans HS-SCCH.

11. Procédé selon la revendication 9, dans lequel le procédé consiste en outre à :
prédéfinir (104, 106) un bit d'indication de mode de fonctionnement sans HS-SCCH dans un UE pour ordonner à l'UE d'activer ou de désactiver le mode de fonctionnement sans HS-SCCH, et dans lequel
l'activation (104, 106) du mode de fonctionnement sans HS-SCCH consiste à : mettre le bit d'indication de mode de fonctionnement sans HS-SCCH à une valeur indiquant l'exécution de l'activation conformément à la signalisation de couche physique, et
activer le mode de fonctionnement sans HS-SCCH conformément à une indication d'activation du bit d'indication ; et
la désactivation (104, 106) du mode de fonctionnement sans HS-SCCH consiste à : mettre le bit d'indication de mode de fonctionnement sans HS-SCCH à une valeur qui est différente de la valeur indiquant l'exécution de l'activation conformément à la signalisation de couche physique, et désactiver le mode de fonctionnement sans HS-SCCH conformément à une indication d'activation du bit d'indication.

12. Procédé selon la revendication 9 ou 11, dans lequel, avant d'activer le mode de fonctionnement sans HS-SCCH ou de désactiver le mode de fonctionnement sans HS-SCCH, le procédé consiste en outre à :
renvoyer (107), depuis l'UE, un message d'acquittement, ACK, au côté réseau.

13. Equipement Utilisateur, UE, comprenant :
une seconde unité de communication (310) configurée pour recevoir une signalisation de couche physique destinée à activer ou désactiver un mode de fonctionnement sans HS-SCCH en provenance d'un côté réseau ; et
une unité de réglage d'état d'activation (320), configurée pour activer ou désactiver le mode de fonctionnement sans HS-SCCH, conformément à la signalisation de couche physique destinée à activer ou désactiver le mode de fonctionnement sans HS-SCCH;
dans lequel la signalisation de couche physique est un ordre HS-SCCH destiné à activer ou désactiver le mode de fonctionnement sans HS-SCCH dans l'ordre HS-SCCH, dans lequel
l'ordre HS-SCCH présentant un type d'ordre égal à 000 et présentant un bit d'activation ou de désactivation du mode de fonctionnement sans HS-SCCH mis à une valeur indiquant l'exécution d'une activation est traité en tant qu'ordre d'activation du mode de fonctionnement sans HS-SCCH ; et
l'ordre HS-SCCH présentant un type d'ordre égal à 000 et présentant le bit d'activation ou de désactivation du mode de fonctionnement sans HS-SCCH mis à une valeur différente de la valeur indiquant l'exécution d'une activation est traité en tant qu'ordre de désactivation du mode de fonctionnement sans HS-SCCH.

14. UE selon la revendication 13, dans lequel la signalisation de couche physique est un ordre HS-SCCH indiquant l'activation ou la désactivation du mode de fonctionnement sans HS-SCCH, dans lequel le type d'ordre de l'ordre HS-SCCH est mis à 000 et un bit Xord,3 de l'ordre HS-SCCH est mis à 1 pour activer le mode de fonctionnement sans HS-SCCH ou est mis à 0 pour désactiver le mode de fonctionnement sans HS-SCCH.

15. UE selon la revendication 13, dans lequel un bit d'indication de mode de fonctionnement sans HS-SCCH est prédéfini dans l'UE pour fournir une instruction d'activation ou de désactivation du mode de fonctionnement sans HS-SCCH et l'unité de réglage d'état d'activation (320) comprend au moins une sous-unité de réglage d'activation (321) ou une sous-unité de réglage de désactivation (322) dans lequel :
la sous-unité de réglage d'activation (321) est configurée pour mettre le bit d'indication de mode de fonctionnement sans HS-SCCH à une valeur indiquant l'exécution de l'activation conformément à la signalisation de couche physique, et pour activer le mode de fonctionnement sans HS-SCCH conformément à une indication d'activation du bit d'indication ; et
la sous-unité de réglage de désactivation (322) est configurée pour mettre le bit d'indication du mode de fonctionnement sans HS-SCCH à une valeur qui est différente de la valeur indiquant l'exécution de l'activation, conformément à la signalisation de couche physique destinée à désactiver le mode de fonctionnement sans HS-SCCH, et pour désactiver le mode de fonctionnement sans HS-SCCH conformément à une indication de désactivation du bit d'indication.

16. UE selon la revendication 13 ou 15, dans lequel la seconde unité de communication (310) est en outre configurée pour envoyer un ACK au côté réseau.

17. Système HSDPA comprenant :
un équipement côté réseau selon l'une quelconque des revendications 4 à 8 ; et
un UE selon l'une quelconque des revendications 13 à 16.
